# EUROPÄISCHE PATENTSCHRIFT

(11) **EP 0 701 968 B1**
(45) Veröffentlichungstag und Bekanntmachung des Hinweises auf die Patenterteilung: **15.04.1998**
(21) Anmeldenummer: 95114321.3
(22) Anmeldetag: 12.09.1995
(51) Int. Cl.: C01B 31/18, F25J 3/02, C01B 31/08, F25J 3/08

(54) **Verfahren zum Gewinnen einer Kohlenmonoxid-Reinfraktion**
Process for producing pure carbon monoxide
Procédé de production de monoxyde de carbonepur

(30) Priorität: 16.09.1994 DE 4433114
(43) Veröffentlichungstag der Anmeldung: 20.03.1996
(73) Patentinhaber: Linde Aktiengesellschaft, 65189 Wiesbaden (DE)
(72) Erfinder: Fabian, Rainer, Dipl.-Ing., D-82538 Geretsried (DE); Bauer, Heinz, D-82067 Ebenhausen (DE)
(74) Vertreter: Kasseckert, Rainer

(56) Entgegenhaltungen:
- EP-A- 0 317 851
- DE-A- 2 323 410
- LINDE BERICHTE AUS TECHNIK & WISSENSCHAFT, Nr. 62, Juni 1988; R. BERNINGER, Seiten 18-23
- LINDE BERICHTE AUS TECHNIK & WISSENSCHAFT, Nr. 55, 1984; R. FABIAN, Seiten 38-42

## Beschreibung

Die Erfindung betrifft ein Verfahren zum Gewinnen einer CO-Reinfraktion aus einer, gegebenenfalls von Wasser und Kohlendioxid befreiten, wenigstens Wasserstoff, Kohlenmonoxid und Methan enthaltenden Einsatzfraktion, wobei diese abgekühlt und partiell kondensiert wird, mittels unterkühltem flüssigen Methan Kohlenmonoxid und Wasserstoff ausgewaschen wird, der ausgewaschene Wasserstoff abgestrippt und die so gewonnene CO/CH₄-reiche Fraktion anschließend einer rektifkatorischen Auftrennung, in der eine Zerlegung in eine CO-Reinfraktion und eine CH₄-reiche Fraktion erfolgt, geführt wird.

Aufgrund erhöhter Reinheitsanforderungen an die Zerlegungsprodukte, der immer größer werdenden Bedeutung der Betriebskosten einer Anlage, sowie der ständigen Verbesserung der zur Verfügung stehenden thermodynamischen Daten, vollzog sich bei der H₂/CO-Zerlegung in den letzten Jahren ein stetiger techischer Wandel.

Als Hauptlieferant für eine H₂/CO-Einsatzfraktion ist nach wie vor der Steam-Reformer zu nennen. Aber auch die Schwerölvergasung mit Sauerstoff - also eine partielle Oxidation - hat, eine billige Sauerstoff-Quelle vorausgesetzt, in den letzten Jahren an Bedeutung als H₂/CO-Lieferant gewonnen.

Der größte Teil des so erzeugten Kohlenmonoxids wird bei der Ameisen-und Essigsäureproduktion verwendet. Ein weiterer Abnehmer findet sich in der Polycarbonatchemie, die als Rohstoff Phosgen hoher Reinheit und dieser wiederum Kohlenmonoxid höchster Reinheit erfordert. Der Methangehalt des Kohlenmonoxids muß hierbei < 10 Mol-ppm, der Wasserstoffgehalt < 1000 Mol-ppm sein. Der bei der CO-Reingewinnung erzeugte Wasserstoff dient, gegebenenfalls nach einer anschließenden Feinreinigung, zu den verschiedensten Hydrierzwecken.

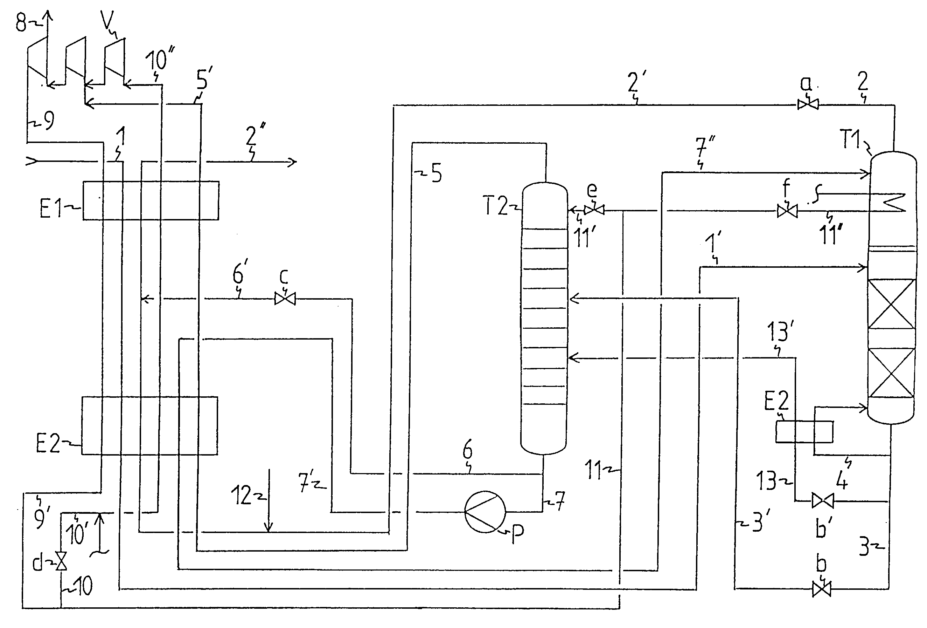

Einen Überblick über die im Einsatz befindlichen Verfahren zur Herstellung von Kohlenmonoxid und als Nebenprodukt Wasserstoff geben die Artikel von R. Fabian in LINDE-Berichte aus Technik und Wissenschaft Nr. 55, 1984, Seite 38 bis 42 und Dr. R. Berninger in LINDE-Berichte aus Technik und Wissenschaft Nr. 62, 1988, Seite 18 bis 23. Aus dem Bild 6 sowie der dazugehörigen Beschreibung des letztgenannten LINDE-Berichts ist ein Verfahren zur CO-Reingewinnung mittels Methanwäsche und integrierter N₂/CO-Trennung bekannt. Bei diesem bekannten Verfahren erfolgt in einer ersten Waschsäule mittels unterkühltem flüssigen Methan ein Auswaschen von Kohlenmonoxid, Wasserstoff und Stickstoff aus dem Einsatzgasstrom. In einer nachgeschalteten Wasserstoff-Strippkolonne wird die am Sumpf der Waschsäule abgezogene Fraktion von Wasserstoff befreit. Das am Sumpf dieser Strippkolonne abgezogene H₂-freie Gemisch wird anschließend in einer weiteren Trennsäule in eine N₂/CO-Fraktion (Kopfprodukt) und eine schwere CH₄-Fraktion (Sumpfprodukt) getrennt. Diese flüssige CH₄-Fraktion wird auf Rohgasdruck gepumpt und der Waschsäule als Waschmittel aufgegeben. In einer vierten Kolonne erfolgt anschließend eine Auftrennung in eine CO-Produktfraktion und eine N₂-reiche Fraktion. Enthält das Einsatzgasgemisch keinen Stickstoff, so kann diese vierte Kolonne entfallen. Die angewärmte CO-Produktfraktion wird zusammen mit sogenannten Kreislauf-CO verdichtet und bei dem geforderten Produktdruck abgegeben. Zur Kälteversorgung dieses Prozeßes dient ein Kohlenmonoxid-Kreislauf mit kälteleistender Turbine.

Um in der Waschsäule ein möglichst vollständiges Auswaschen von Kohlenmonoxid und Stickstoff zu erreichen, ist es notwendig, daß das als Waschmittel dienende Methan in möglichst reiner Form auf die Waschsäule gegeben wird. Zum Erreichen einer möglichst hohen CH₄-Reinheit in der Waschfraktion bedarf es jedoch einer hohen Aufkochleistung in derjenigen Kolonne, in der die CH₄-reiche Waschfraktion gewonnen wird.

Der Erfindung liegt die Aufgabe zugrunde, die obengenannten Nachteile des Standes der Technik zu vermeiden.

Dies wird erfindungsgemäß dadurch erreicht, daß das als Waschmittel dienende unterkühlte flüssige Methan mindestens 2 bis 15 Mol-% Kohlenmonoxid, vorzugsweise 7 bis 10 Mol-% Kohlenmonoxid, enthält.

Das erfindungsgemäße Verfahren sowie die erfindungsgemäße Vorrichtung und weitere Ausgestaltungen derselben seien anhand der Figur näher erläutert.

Alle nachfolgenden Mengenangaben zu Verfahrensströmen sind in Mol-% angegeben.

In der nachfolgenden Tabelle sind beispielshaft Temperaturdruck, Durchflußmenge sowie Flüssiganteil der Gase bzw. Gasgemische in den mit Bezugszeichen versehenen Leitungen angegeben.

| Leitung | T [K] | p [bara] | Durchfluß [Nm³/h] | Flüssiganteil |
|---|---|---|---|---|
| 1 | 308,0 | 13,1 | 2720 | 0,0 |
| 1' | 88,8 | 12,8 | 2720 | 0,118 |
| 2 | 94,0 | 12,7 | 2115 | 0,0 |
| 2' | 92,0 | 4,9 | 2115 | 0,0 |
| 2'' | 300,0 | 4,5 | 2234 | 0,0 |
| 3 | 124,4 | 12,7 | 846 | 1,0 |
| 3' | 108,0 | 4,7 | 846 | 0,82 |
| 4 | 124,4 | 12,7 | 1789 | 1,0 |
| 5 | 97,4 | 4,5 | 831 | 0,0 |
| 5' | 305,0 | 4,1 | 831 | 0,0 |
| 6 | 125,7 | 4,7 | 756 | 1,0 |
| 6' | 125,0 | 4,6 | 756 | 0,98 |
| 7 | 125,7 | 4,7 | 726 | 1,0 |
| 7' | 126,1 | 13,7 | 726 | 1,0 |
| 7'' | 88,8 | 12,7 | 726 | 1,0 |
| 8 | 305,0 | 9,9 | 576 | 0,0 |
| 9 | 305,0 | 24,2 | 1049 | 0,0 |
| 9' | 88,8 | 24,0 | 1049 | 1,0 |
| 10 | 88,8 | 24,0 | 613 | 1,0 |
| 10' | 87,8 | 2,0 | 613 | 0,988 |
| 10'' | 300,0 | 4,2 | 794 | 0,0 |
| 1 | 88,8 | 24,0 | 436 | 1,0 |
| 11' | 89,4 | 4,5 | 256 | 1,0 |
| 11'' | 88,3 | 2,1 | 180 | 0,988 |
| 12 | 100,2 | 7,9 | 90 | 1,0 |
| 13 | 108,0 | 4,8 | 486 | 0,82 |
| 13' | 129,0 | 4,7 | 486 | 0,0 |

Die Figur zeigt schematisch ein Verfahren zur Gewinnung eines Kohlenmonoxid-Produktstromes und eines Wasserstoff-Nebenproduktstromes durch Zerlegung einer wenigstens Wasserstoff, Kohlenmonoxid und Methan enthaltenden Einsatzfraktion, wobei diese vorzugsweise aus einem Steam-Reformer stammt.

Die gegebenenfalls von Wasser und Kohlendioxid mittels eines Adsorptionsverfahrens befreite Einsatzfraktion wird über Leitung 1 durch die beiden Wärmetauscher E1 und E2 geführt. Die Einsatzfraktion weist eine Zusammensetzung von 72,9 Mol-% H₂, 24,5 Mol-% CO, 2,4 Mol-% CH₄ und 0,3 Mol-% sonstige Komponenten, wie z.B. N₂ auf. In den beiden Wärmetauschern wird die Einsatzfraktion soweit abgekühlt, daß ein Großteil des Kohlenmonoxids und Methans bereits kondensiert. Die abgekühlte und partiell kondensierte Einsatzfraktion wird über Leitung 1' dem unteren Teil der Kolonne T1 in dessem oberen Bereich aufgegeben. Die Kolonne T1 stellt eine Kombination aus einem Wasserstoff-Stripper und einer Methan-Waschsäule dar. Hierbei bildet erfindungsgemäß der obere Teil dieser Kolonne die Methan-Waschsäule, während der untere Teil der Kolonne den Wasserstoff-Stripper darstellt. Der Kolonne T1 wird am Kopf über Leitung 2 eine H₂-reiche Fraktion abgezogen, bestehend aus 93,7 Mol-% H₂, 4,2 Mol-% CO, 2,9 Mol-% CH₄ und 0,1 Mol-% N₂. Diese wird im Ventil a entspannt und anschließend über Leitung 2' im Gegenstrom zu abzukühlenden Verfahrensströmen durch die beiden Wärmetauscher E2 und E1 geführt. Die Abgabe dieser H₂-reichen Fraktion erfolgt über Leitung 2'. Bei Bedarf kann diese H₂-reiche Fraktion auch getrennt unter Druck angewärmt werden und z.B. in einer Druckwechseladsorption zu Rein-Wasserstoff oder Reinst-Wasserstoff nachgereinigt werden. Am Sumpf der Kolonne T1 wird eine CO/CH₄-reiche Fraktion, bestehend aus 46,8 Mol-% CO, 52,8 Mol-% CH₄, 0,4 Mol-% N₂ und 10 ppm H₂, über Leitung 3 abgezogen. Ein Teil dieser Fraktion wird über Leitung 4 in einem Reboiler verdampft und anschließend wieder auf die Kolonne gegeben. Der Übersichtlichkeit halber wurde in der Figur an dieser Stelle ein eigener Wärmetauscher gezeichnet, der ebenfalls mit E2 bezeichnet wurde. In der Praxis jedoch bilden die beiden in der Figur dargestellten Wärmetauscher E2 einen Wärmetauscher. Die aus dem Sumpf der Kolonne T1 abgezogene Fraktion gelangt über zwei Wege in die CO/CH₄-Trennkolonne T2. So wird ein Teil dieser Fraktion im Ventil b entspannt - wobei dieser Teil fast zur Gänze flüssig bleibt - und anschließend über Leitung 3' auf die Trennkolonne T2 gegeben. Ein weiterer Teil wird im Ventil b' entspannt und über Leitung 13 dem Wärmetauscher E2 zugeführt. In diesem wird die Fraktion gänzlich verdampft und anschließend über Leitung 13' ebenfalls auf die Trennkolonne T2, jedoch unterhalb der Aufgabestelle des ersten Teilstromes, gegeben. Über Kopf und mittels Leitung 5 wird aus dieser Trennkolonne T2 die Kohlenmonoxid-Reinproduktfraktion abgezogen und im Gegenstrom zu abzukühlenden Verfahrensströmen in den Wärmetauschern E2 und E1 angewärmt. Diese Kohlenmonoxid-Reinfraktion weist eine Zusammensetzung von 99,2 Mol-% CO, 0,8 Mol-% N₂, 23 ppm H₂ und 10 ppm CH₄ auf. Theoretisch lassen sich H₂ und CH₄ beliebig weit aus der Kohlenmonoxid-Reinfraktion abtrennen. Aus dem Sumpf der Trennkolonne T2 wird eine CH₄-reiche Fraktion abgezogen, bestehend aus 93,0 Mol-% CH₄, 7,0 Mol-% CO und 0,04 Mol-% N₂. Der für die Wäsche nicht benötigte Teil dieser CH₄-reichen Fraktion wird über Leitung 6 abgeführt, im Ventil c entspannt und anschließend über Leitung 6' der H₂-reichen Fraktion in der Leitung 2' beigemischt. Über Leitung 2'' wird ein H₂-reiches Gasgemisch, bestehend aus 88,7 Mol-% H₂, 4,2 Mol-% CO, 2,9 Mol-% CH₄ und 0,9 Mol-% N₂, abgeführt. Die für die Wäsche benötigte CH₄-reiche Fraktion wird über Leitung 7 der Pumpe P, in der sie auf Rohgasdruck gepumpt wird, zugeführt. Anschließend wird die CH₄-reiche Fraktion im Wärmetauscher E2 unterkühlt und über Leitung 7'' auf den Kopf des oberen Teils der Kolonne T1, also dem Methan-Waschsäulenteil, gegeben. Erfindungsgemäß enthält diese als Waschmittel dienende unterkühlte CH₄-reiche Fraktion mindestens 2 bis 15 Mol-% Kohlenmonoxid, vorzugsweise 7 bis 10 Mol-% Kohlenmonoxid. Dies bedeutet, daß die Aufkochleistung in der Trennkolonne T2 beliebig niedrig gehalten werden kann. Unter Umständen kann sie sogar ganz entfallen. Der Übersichtlichkeit halber wurde in der Figur auf eine Darstellung derselben verzichtet. Die für das erfindungsgemäße Verfahren benötigte Energie wird mittels eines zusätzlichen CO-Kreislaufes bereitgestellt. Hierzu wird die über Leitung 5' aus dem Wärmetauscher E1 abgeführte Kohlenmonoxid-Reinproduktfraktion der zweiten Stufe eines dreistufigen Kolbenverdichters V zugeführt. Im vorliegenden Falle verdichtet hierbei die erste Stufe auf 4,5 bar bara, die zweite Stufe auf 10,0 bar bara und die dritte Stufe auf 24,5 bar bara. Die Kohlenmonoxid-Reinproduktfraktion kann nach der zweiten oder dritten Verdichterstufe abgezogen werden. Ein Teilstrom, nämlich derjenige der den Kohlenmonoxid-Kältekreislauf bildet, wird nach der dritten Verdichterstufe über Leitung 9 abgezogen, im Wärmetauscher E1 abgekühlt, im Wärmetauscher E2 kondensiert und unterkühlt und anschließend über Leitung 9' bis zu einem Punkt geführt, an dem diese Kohlenmonoxid-Fraktion aufgeteilt wird. Ein erster Teilstrom davon wird über Leitung 10 Ventil d zugeführt und in diesem entspannt. Anschließend wird dieser Teilstrom über Leitung 10' durch die Wärmetauscher E2 und E1 geführt und dabei gegen abzukühlende Verfahrensströme verdampft und angewärmt. Dieser Teilstrom wird anschließend über Leitung 10'' der ersten Verdichterstufe zugeführt. Der zweite Teilstrom wird über Leitung 11 zu einem weiteren Punkt, an dem eine Aufteilung dieses Teilstromes erfolgt, geführt. Ein Teil dieses Stromes wird im Ventil e entspannt und über Leitung 11' auf den Kopf der Trennkolonne T2 als Rücklauf aufgegeben. Der andere Teil wird im Ventil f entspannt und anschließend über Leitung 11'' dem oberen Teil der Kolonne T1 als Kühlmittel zugeführt. Das aus der Kolonne T1 abgeführte, angewärmte Kühlmittel wird anschließend der Leitung 10' vor dem Wärmetauscher E2 beigemischt. Unter Umständen ist es notwendig, daß zur Kältebereitstellung über Leitung 12 flüssiger Stickstoff der Leitung 2' beigemischt wird. Anstelle der Zuführung von flüssigem Stickstoff über Leitung 12 ist es auch denkbar, eine Entspannungsturbine im Kohlenmonoxid-Kältekreislauf zu integrieren.

Gegenüber den bekannten Verfahren des Standes der Technik weist die Erfindung gravierende Vorteile auf. So erfordert die Tatsache, daß am Sumpf der Trennkolonne T2 eine unreine CH₄-Fraktion gewonnen wird, eine weitaus kleinere Kohlenmonoxid-Kältekreislaufmenge, da unter Umständen auf eine Beheizung der Trennkolonne T2 verzichtet werden kann. Der spezifische Energieverbrauch ist aufgrund der niedrigeren oder nicht benötigten Aufkocherleistung für die Trennkolonne T2 entsprechend verringert. Der nun mögliche Zusammenbau von Methan-Waschsäule und Wasserstoff-Stripper in einer Kolonne ermöglicht eine gegenüber herkömmlichen Verfahren billigere Bauweise. Eine mit dem erfindungsgemäßen Verfahren arbeitende Anlage benötigt ca. 80 % der Bauteile einer konventionellen Anlage mit Methan-Wäsche. Eine derartige Verfahrensführung, wie sie in dieser Erfindung beschrieben wird, ist insbesondere für Verfahren und Anlagen mit kleineren Kohlenmonoxid-Kapazitäten, insbesondere unter 1000 Nm³/h, sinnvoll. Zwar wirkt die am Sumpf der Trennkolonne T2 gewonnene unreine CH₄-Fraktion, die ja im wesentlichen neben Methan noch Kohlenmonoxid enthält, sowie die am Kopf der Kolonne T1 gewonnene H₂-reiche Fraktion, die ebenfalls einige Prozent Kohlenmonoxid enthält, ausbeuteverschlechternd doch wird dieser Nachteil durch die Tatsache, daß auf eine aufwendigere Prozeßführung verzichtet werden kann, kompensiert. So beträgt die im vorliegenden Beispiel erzielte Kohlenmonoxid-Ausbeute 85,8 %.

## Patentansprüche

1. Verfahren zum Gewinnen einer CO-Reinfraktion aus einer, gegebenenfalls von Wasser und Kohlendioxid befreiten, wenigstens Wasserstoff, Kohlenmonoxid und Methan enthaltenden Einsatzfraktion, wobei diese abgekühlt und partiell kondensiert wird, mittels unterkühltem flüssigen Methan Kohlenmonoxid und Wasserstoff ausgewaschen wird, der ausgewaschene Wasserstoff abgestrippt und die so gewonnene CO/CH₄-reiche Fraktion anschließend einer rektifkatorischen Auftrennung, in der eine Zerlegung in eine CO-Reinfraktion und eine CH₄-reiche Fraktion erfolgt, geführt wird, **dadurch gekennzeichnet**, **daß** das als Waschmittel dienende unterkühlte flüssige Methan mindestens 2 bis 15 Mol-% Kohlenmonoxid, vorzugsweise 7 bis 10 Mol-% Kohlenmonoxid, enthält.

2. Verfahren nach Anspruch 1, dadurch gekennzeichnet, daß die in der rektifikatorischen Auftrennung gewonnene CH₄-reiche Fraktion als Waschmittel verwendet wird.

3. Vorrichtung zum Durchführen eines Verfahrens nach einem der obengenannten Ansprüche, dadurch gekennzeichnet, daß der Wasserstoff-Stripper den unteren Teil einer Kolonne bildet, während der obere Teil dieser Kolonne die Methan-Waschsäule darstellt.

## Claims

1. Process for producing a pure CO fraction from a feed fraction which may have been freed from water and carbon dioxide and which contains at least hydrogen, carbon monoxide and methane, this feed fraction being cooled and partially condensed, carbon monoxide and hydrogen being scrubbed out using supercooled liquid methane, the hydrogen scrubbed out being stripped off, and the CO/CH₄-rich fraction thus produced then being separated by rectification, in which it is resolved into a pure CO fraction and a CH₄-rich fraction, characterized in that the supercooled liquid methane used as scrubbing medium contains at least 2 to 15 mol-% carbon monoxide, preferably 7 to 10 mol-% carbon monoxide.

2. Process according to Claim 1, characterized in that the CH₄-rich fraction produced in the separation by rectification is used as scrubbing medium.

3. Apparatus for carrying out a process according to one of the abovementioned claims, characterized in that the hydrogen stripper forms the lower part of a column, whereas the upper part of this column is the methane scrubber section.

## Revendications

1. Procédé de production d'une fraction pure de CO à partir d'une fraction de charge contenant au moins de l'hydrogène, du monoxyde de carbone et du méthane, facultativement libérée de l'eau et du dioxyde de carbone, où celle-ci est refroidie et partiellement condensée, lavée du monoxyde de carbone et de l'hydrogène au moyen de méthane liquide surfondu, l'hydrogène lavé est fractionné et la fraction riche en CO/CH₄ ainsi obtenue est conduite ensuite vers une séparation par rectification, dans laquelle une séparation en une fraction pure de CO et une fraction riche en CH₄ est réalisée, caractérisé en ce que le méthane liquide surfondu, servant d'agent de lavage contient au moins 2 à 15% en moles de monoxyde de carbone, de préférence de 7 à 10% en moles de monoxyde de carbone.

2. Procédé suivant la revendication 1, caractérisé en ce que la fraction riche en CH₄ obtenue dans la séparation par rectification est utilisée comme agent de lavage.

3. Dispositif pour réaliser un procédé suivant l'une des revendications précédentes, caractérisé en ce que le lavage d'hydrogène forme la partie inférieure d'une colonne, alors que la partie supérieure de cette colonne représente la colonne de lavage du méthane.
